# EUROPEAN PATENT APPLICATION

(11) **EP 0 713 317 A1**
(43) Date of publication of application: **22.05.1996**
(21) Application number: 94500187.3
(22) Date of filing: 18.11.1994
(51) Int. Cl.: H04M 3/50

(54) **Method and apparatus for servicing advertising messages by telephone**

(71) Applicant: Borbon Blen, Georgina, San Pedro, San Jose (CR)
(72) Inventor: Borbon Blen, Georgina, San Pedro, San Jose (CR)
(74) Representative: Gomez-Acebo y Pombo, José Miguel

(57) **Abstract**

A telephone advertising service provides a short advertising message through a telephone receiver as a telephone call is initiated. The advertising message is stopped after a predetermined run time, and an invitation-to-dial tone is added. The advertising message is stopped when a subscriber starts to dial numbers. The method provides the advertising messages in lieu of invitation-to-dial tones. Differentiated subscribers are individually provided with distinct advertising messages. Subscribers are distinguished by characteristics of exchange number, monthly call volume, call type, geographical location and time of day. The advertising messages are provided by a message system rack connected to a digital or analog telephone exchange. Each rack has plural message recorders and plural cards connected to multiple users. Software controls a connection network. Subscriber lines are sampled to sense when a call is being initiated and to signal to a controller that a telephone call is being initiated. A PCM audio interface is activated. An available message channel is switched to the subscriber line, and a corresponding message is played over the subscriber line. Soon the subscriber line is connected to the telephone exchange, and an invitation-to-dial tone is provided. Several different messages are offered in different sets of channels, changing the messages depending on the time of day. When a prohibit service signal is active, the subscriber line is switched directly to the telephone exchange.

## Description

PROTEL is a patented advertisement service that takes advantage of the first seconds of a telephone call to communicate a commercial massage. Normally, when the telephone set is lifted, the subscriber awaits the invitation-to-dial tone and then dials the number of the telephone with which he desires to communicate. With the PROTEL SERVICE, when the telephone set is lifted, a prerecorded commercial message would be heard instead of the invitation-to-dial tone. At the moment the subscriber starts to dial his number, the message disappears and the call progresses normally.

The PROTEL SERVICE could also be offered in the following manner. When the telephone set is liked the prerecorded message will be heard for a no longer than three seconds time period, then the invitation-to-dial tone will follow and from then on the subscriber would proceed with his telephone call as usual.

The PROTEL pre-design presented in this document is capable of differentiating subscribers individually. With this capacity PROTEL can establish commercial messages tailored to expected audiences. In general terms, every subscriber may be classified according to type, geographical location and time of day.

The subscriber type could correspond, in principle, to commercial or residential subscribers. However, this division could be fine tuned to allow further distinction among commercial subscribers. For example, by monthly call volume, by main activity - industry, commerce, tourism, education - etc..

The geographical location would allow the residential subscribers to be classified according to their income or fundamental activity. For example, in the rural areas it would be expected that the subscriber be related to agriculture or cattle raising.

As far as the time of day is concerned, it is convenient to distinguish the type of commercial message that will be sent and the cost of that space. For example, the advertisements dining working hours could be different from those placed during non-working hours. And this, in turn, could be modified depending on the type of subscriber; commercial or residential.

The PROTEL SERVICE does not require the subscriber's telephone set to be modified, nor the installation of any special device in the telephone set. The modification is done directly in the telephone exchanges that will provide the service, whether they are of the electromechanical type - analog- or digital type.

The PROTEL SERVICE involves several groups of persons with complementary activities:
1.- The subscribers: they are the direct recipients of this new communication means.
2.- The telephone services companies: they are the ones to offer the service through their installed infrastructure.
3.- The telephone equipment manufacturing companies: they are the ones to produce the equipment and the necessary programming to make the PROTEL SERVICE available in existing or future equipment.
4.- The advertising companies: they are the biggest potential customers, as PROTEL could prove to be a highly selective means to place commercial messages.

The PROTEL SERVICE would be absolutely of free choice for every subscriber. Those subscribers willing to have the PROTEL SERVICE available with their regular telephone service, would receive a discounted rate from the telephone service company. Those who do not wish to have the PROTEL SERVICE would continue to have the same regular telephone service and the same prevailing tariff structure that they currently enjoy. For these subscribers, PROTEL would not mean any change at all.

PROTEL means a new business line that would generate additional income and would allow to offer certain discounts to subscribers that receive the service.

Due to the great acceptance that the PROTEL SERVICE is expected to have, and to the fact that it has been patented, the telephone equipment, - digital exchanges, specifically - capable of offering the service will take advantage over those unable to offer this functionality. The telephone equipment manufacturer must have an authorization or license to incorporate the PROTEL SERVICE to his products. These products will be the selected ones by the telephone services companies because they would incorporate the necessary functionality to provide the PROTEL SERVICE.

PROTEL is a mass communication medium with a very high audience selectivity. The newspapers, the radio and the television are mass communication media but with a very low or almost inexistant audience selectivity. Because of the massive coverage of these media, it is expected that all types of audiences will be present at certain given moments and that the chosen message for each one of them will reach its target. In the case of the PROTEL SERVICE, the subscriber may be classified according to its type, geographical location and time of the day. This allows the target markets to be determined with great precision and the commercial message to be focused in the most specific manner.

There are two basic types of telephone exchanges: the analog exchanges - also known as electromechanical - and the digital exchanges. This distinction is crucial because the implementation of the PROTEL SERVICE depends on it. One of the two possible implementation options of the PROTEL SERVICE offers the capability of handling both types of telephone exchanges. However, its installation cost is very high and its functionality is limited. The other option - programming of categories - allows greater functionality but is limited to digital type exchanges. This, maybe apparent constraint, is not really one, because in recent years analog exchanges have stepped back to allow exchanges of newer digital technology to step in.

The analog exchanges have a limited capacity of 10,000 subscribers as compared to the digital exchanges capable of handling up to 350,000 subscribers. The digital technology allows optimal use of the infrastructure resources at telephone exchanges and concerning transmission, which is the communication between telephone exchanges. Another advantage lies In the fact that in the digital environment, audio, video and data signal have all the same shape and this allows them to be given a common means of communication. This is known as the ISDN, which stands for Integrated Services Digital Network. The world trend is to adopt this mode of operation in a generalized manner.

In a country like Costa Rica 41 % of the exchanges are digital and it is expected that by 1998 this percentage will rise to 75%. This trend is stronger in developed countries like the United States or those of the European Community. The Table 1 below shows the subscriber lines and the telephone exchanges in existence in 1993 and their projection to 1998.

**Table 1**

| Projection of subscriber lines and - Telephone Exchanges 1993 - 1998 * (Great Metropolitan Area) | | |
|---|---|---|
| | 1993 | 1998 |
| Subscriber lines | | |
| Digital | 184,460 | 624,800 |
| Analog | 242,300 | 205,395 |
| Manual | 2,240 | - |
| | | |

| Telephone Exchanges | | |
|---|---|---|
| Digital | 41 | 119 |
| Analog | 113 | 96 |
| Manual | 14 | - |
| Concentrators | 4 | - |

| | | |
|---|---|---|
| *Source: Costa Rican Electric Power Institute | | |

These and further and other objects and features of the invention are apparent in the disclosure which includes the above and ongoing written specification with the claims and the drawings.

### BRIEF DESCRIPTION OF THE DRAWINGS

Figure 1 schematically shows connections between subscribers and local telephone exchanges.

Figure 2 schematically shows the connections of Figure 1 with electronic equipment to incorporate the invention.

Figure 3 schematically shows the new rack and special mounting of subscriber cards.

Figure 4 schematically shows function parts for the subscribers.

Figure 5 schematically shows a typical digital telephone exchange.

Figure 6 schematically shows message machines connected to the exchange of Figure 5.

Figure 7 is a table of categories of telephone calls.

Figure 8 is a table of categories of telephone calls which includes the new invention.

Figure 9 schematically shows a bit structure of the new invention in calls.

### DETAILED DESCRIPTION OF THE DRAWINGS

The implementation by interception of the PROTEL SERVICE allows it to be applied to both analog exchanges and digital exchanges as well. This solution requires the installation of additional electronic equipment before the subscriber lines reach the telephone exchange. The additional equipment serves the purpose of intercepting the subscriber call and introducing the prerecorded message before the telephone exchange sends the invitation-to-dial tone. Since this equipment is installed between the telephone exchange and the subscriber, the same will work for both types of exchanges, analog and digital.

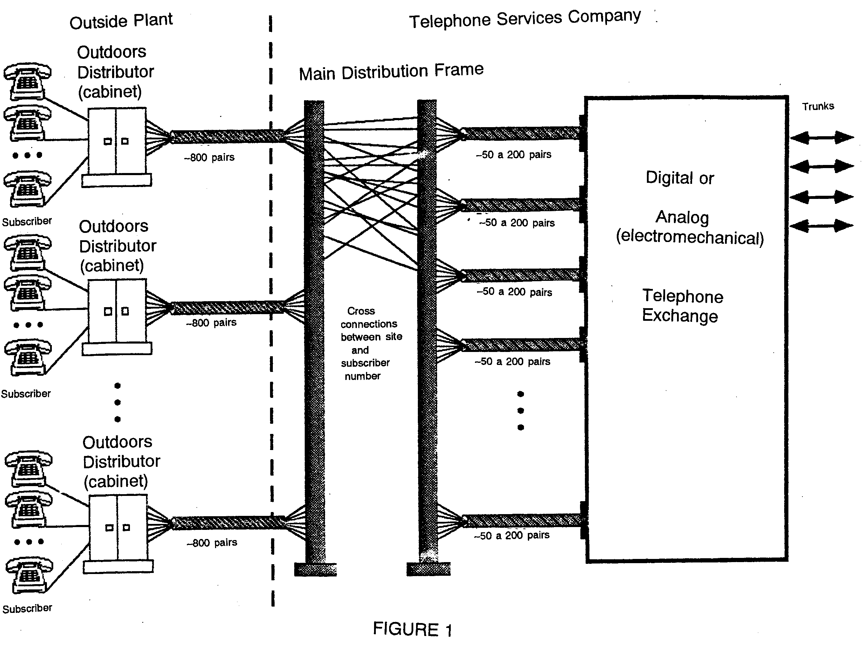

The figure 1 shows the general connection scheme between subscribers and the local telephone exchanges. Each subscriber telephone is connected directly to an external distributor through a copper telephone twisted pair. The external distributors - normally known as cabinets - gather the subscriber twisted pairs and sends them to the telephone exchanges through cables containing around 800 twisted pairs.

The cables containing 800 twisted pairs are received at the Telephone Services Company building in the main distribution frame. In the main distribution frame, the physical twisted copper pair is cross connected - distributed - to the physical twisted copper pair of the telephone exchange that corresponds to a specific telephone number. This way telephone numbers are assigned to the subscribers regardless of their physical location. When a subscriber changes his address, he may keep his current telephone number provided he remains within the same geographical area covered by the telephone exchange.

Telephone cables containing between 50 to 200 subscriber twisted pairs leave the main distribution frame. These cables are connected to the telephone exchange, either of the analog or digital type.

What is known as a physical connection is run along the distance between the subscriber telephone set and the 50 to 200 twisted copper pairs on the telephone exchange side That is, for every single subscriber there is a physical pair - a couple of copper wires - connecting his telephone set to the telephone exchange. This differentiation, of a telephone pair per subscriber is the key for the implementation by interception.

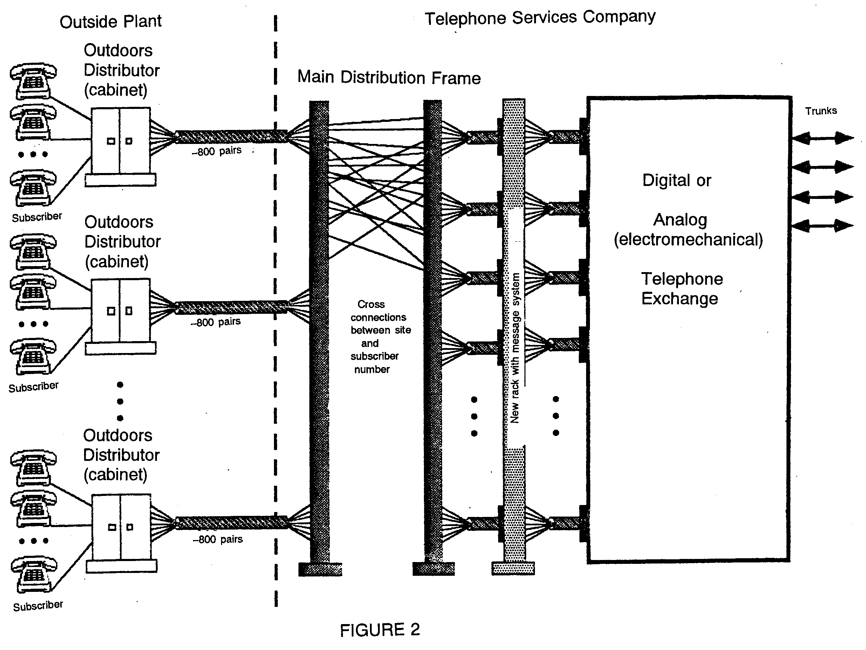

The figure 2 shows the same scheme of figure 1 but with the additional electronic equipment to incorporate the PROTEL SERVICE. In the figure a new rack is shown that would have to be mounted at the exit of the main distribution frame to intercept the subscriber telephone pairs before they are connected to the telephone exchange.

In fact, as many new racks would have to be mounted as necessary to provide the service to all subscribers requesting it. Each rack would contain the special subscriber cards that would allow the introduction of the PROTEL commercial messages before the telephone exchange sends the invitation-to-dial tone.

The location of the new rack, at the exit of the main distribution frame, is necessary for the PROTEL SERVICE to be assigned to a specific telephone number and not to a geographical location. In this way, a subscriber moving from one address to another, within the same geographical area serviced by the telephone exchange, would not imply any change of state within the PROTEL SERVICE.

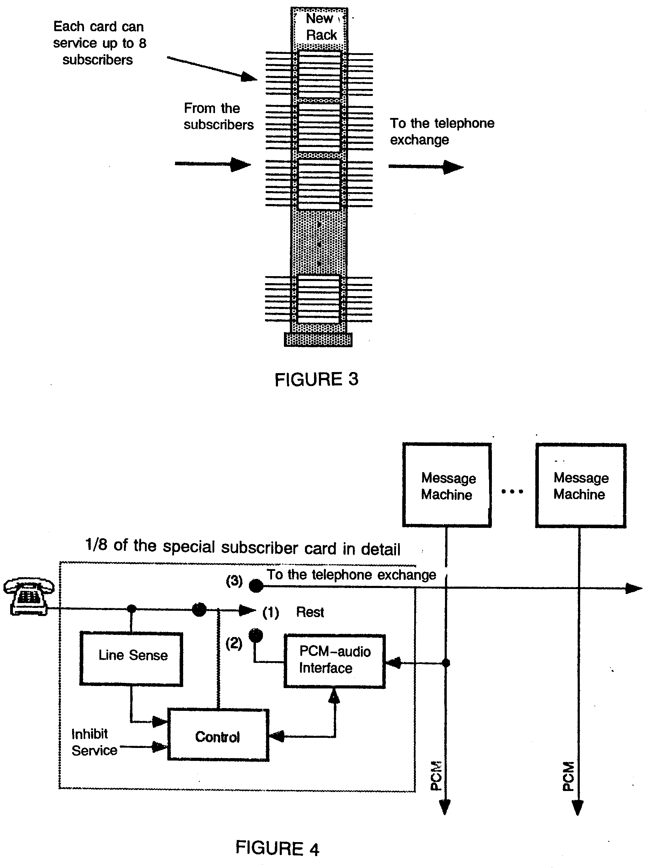

The figure 3 shows in a schematic form, the new rack and the mounting of the special subscriber cards. It is estimated that each subscriber card can service between 6 and 8 subscribers. In an analog telephone exchange with a 10,000 subscribers capacity, 1250 special subscriber cards would be required

The functional parts that every subscriber line must have in order to receive the PROTEL SERVICE is shown in figure 4. The schematic shown in figure 4 could be duplicated from 6 to 8 times on each special subscriber card.

The main part is the three position electronic switch that connects the subscriber telephone set to either the message machine or the telephone exchange under the sequence of a control module. Normally the switch is in its rest position (1). This corresponds to the telephone set with the head set in its rest position. When the subscriber lifts the head set the circuit is closed and the Line Sense module will signal to the Control that a phone call is being initiated. The Control will immediately activate the PCM-audio interface to search for an available message channel and makes the switch move to position (2) where briefly thereafter the corresponding message will be heard. The PCM-audio interface establishes the synchronization with the Message Machine and makes the PCM to audio conversion. When the message finishes, the Control connects the subscriber to the telephone exchange where the latter will provide the invitation-to-dial tone and the call proceeds in the usual manner.

If the subscriber has not requested the PROTEL SERVICE, the Inhibit Service signal will indicate so to the Control, which in turn will move the switch directly to position (3) where it will connect to the Telephone Exchange allowing the telephone call to proceed normally.

This switch must be controlled by the Control module to adopt one of three possible positions; (1) rest, (2) connection to PCM-audio interface, and (3) connection to the telephone exchange.

With this module the condition that the subscriber has lifted his head set and is about to initiate a call is sensed. The output of this module is a signal to the Control module in order to have the message connection sequence initiated.

This signal distinguishes between those subscribers serviced by the PROTEL SERVICE and those who are not. When this signal is active the subscriber is connected directly to the telephone exchange. This signal may be present forced by a strap or a jumper on the special subscriber card.

This part establishes an available route to hear the prerecorded message, converts the PCM-coded message to audio to have it listened by the subscriber, and receives the conclusion of message signal from the message machine.

The route chosen by the interface may be general or specific. In case of the general route, the interface would simply take the first available channel to listen to the prerecorded message. In this scheme the message machine could only offer a message that can change according to the time of the day. In the case of the PCM 30 + 2 the 30 channels of the PCM would have the same message at a given time.

In the case of the specific route, the interface could have predefined by straps or jumpers on the special interface card, the set of channels over which to establish the connection to listen the message. Thus, each message machine could offer several different messages in different sets of channels and at the same time be able to change these messages depending on the time of the day.

This module receives the Line Sense signal, and the Inhibit Service signal to trigger the control sequence for the switch and the PCM-audio interface.

There is absolutely no limitation. Every subscriber of a given telephone exchange entitled to this service may at will choose to connect or disconnect himself/herself to/from the service. The connection is done in the special subscriber card in PROTEL SERVICE form.

This module would have the following major sates sequence:
- State 0:: The controller has the switch in its rest position (1) and is awaiting the Line Sense signal. If the subscriber has not lifted the head set, the controller remains in this state, otherwise the transition to state 1 will take place.
- State 1:: The controller reads the status of the Inhibit Service signal. Should it be active, then we would be dealing with a subscriber not having requested to have the PROTEL SERVICE and the transition to state 4 will take place.
- State 2:: The controller activates the PCM-audio interface to have it search for an available channel and places the switch in position (2). The transition to state 3 takes place.
- State 3:: The controller waits for the prerecorded message transmission to finish. The transition to state 4 takes place at the end of the prerecorded message.
- State 4:: The controller places the switch in position (3) and waits for the Line Sense module to indicate when the subscriber has hung his head set. The transition back to state 0 takes place when the subscriber hangs the head set.

The invitation-to-dial tone substitution by the prerecorded message is not done.

The sequence of connecting the prerecorded message for three seconds and then sending the invitation-to-dial tone is done.

It is important to notice that this implementation of the PROTEL SERVICE is based on the local telephone exchange, which by itself implies that there is a geographical location defined by the distribution design of the telephone service company's network. This distribution covers groups of 10,000 to 40,000 subscribers in Costa Rica and up to 350,000 subscribers in some cities in the United States. The analog telephone exchanges are normally capable of handling up to 10,000 subscribers, whereas telephone exchanges of larger capacities are of the digital type.

Within a specific telephone exchange, each subscriber may be connected to any existent message machine independently. However, since the service is tied to the telephone number and not to its location within the geographical zone, a group of telephone numbers are not necessarily located within the same geographical area serviced by the telephone exchange.

Finally, there is a limit to the amount of messages available. This depends on the message capacity of the message machine and on the number of message machines available.

The direct connection between a subscriber and the message machines allows any relation between subscriber types and message types. The only limitation, again, lies in the number of messages available in the message machines.

Here the limitation lies in the design of the message machine. However, the limitation is much lesser because it is quite simple to have the message machine change a given set of resident messages by another set of messages at a predetermined hour. This process may take place repeatedly according to a predefined schedule.

From the point of view of the PROTEL SERVICE the number of different required messages would be the result of:
a) Number of geographical areas within the telephone exchange zone
b) Number of subscriber types per geographical area, and
c) Number of periods in a day per subscriber type.

From the point of view of the design presented the maximum number of available messages would depend on:
a) The number of available message machines in the telephone exchange
b) The number of channel groups to which a different message could be assigned per message machine, and
c) the number of different periods that may be programmed during the day for each group of channels.

Both points of view have to be balanced to adequately meet the advertisement requirements with the required infrastructure at the telephone exchange.

The installation of the racks requires physical space in the building where the telephone exchange is located, specifically in the main distributor frame's site. The installation includes not only the racks, but also the special subscriber cards and their respective wiring. The installation is very labor intensive as every single subscriber line arriving there will require hand made connections.

These special subscriber cards would have an average cost of around $100 according to information requested in this sense and stating the basic requirements. In the case of a telephone exchange servicing 10,000 subscribers, 1250 cards would be required yielding a total cost of around $125,000.

The number of message machines that are required for a given telephone exchange will depend on the needs from the advertisement point of view, the restrictions on the amount of different messages that the message machine may handle and the traffic requirements to prevent the PROTEL SERVICE of becoming a bottle neck.

The cost of a message system such as the one sold by the firm CIBERTEC S.A., see appendix 1, is around $42,000 in its basic version. This system is currently being used to evacuate information requests from customers in some banks of the National Banking System, in private banks and to provide the time in the number 112.

The system from CIBERTEC S.A. would need to be modified in order to meet the requirements stated in this document.

Once the PROTEL SERVICE has been installed in a telephone exchange, maintenance of the PROTEL SERVICE would involved two main activities: maintenance of the messages and maintenance of the subscribers.

The maintenance of the messages would consist in recording the messages in digital form and introducing them in the message machines according to the marketing needs. This operation would be as simple as introducing a diskette into a computer, once the massage is in a digital medium.

The maintenance of the subscribers would consist in drawing new subscribers to the PROTEL SERVICE and removing the service from those who no longer desire to have it and changes in the subscriber type to allow the reception of a new set of different messages. These actions require manual intervention in the connection that are made in the racks and in the strips or jumpers installed in the special subscriber cards.

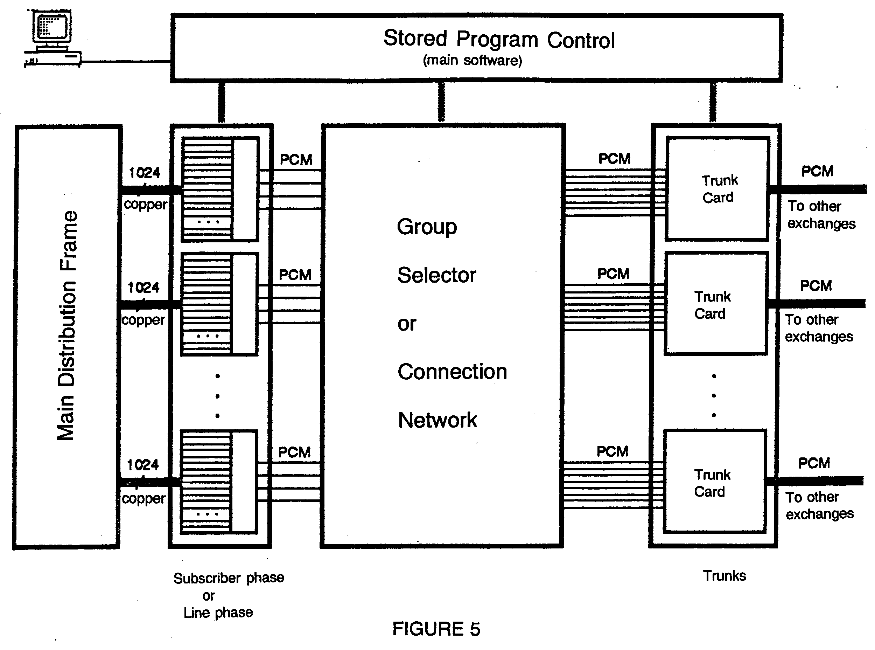

The figure 5 shows in a schematic form a typical digital telephone exchange. One of the most important differences in the way a digital telephone exchange is built is in the way control of the same is done. All actions in a digital telephone exchange are controlled by a stored program. This scheme is known as Stored Program Control. The flexibility that this control scheme provides is the greatest advantage to include a new service in the telephone exchange, this of course, is certainly true for the PROTEL SERVICE. The main software of the telephone exchange controls all parts of the exchange: the subscriber phase, the group selector and the trunks.

On the left side of the figure we find the main distributor, which was introduced earlier with greater detail in figure 1. At the exit of the main distributor telephone pairs are taken in groups of 1024 to feed what is known as the subscriber phase or line phase. In the subscriber phase the individual subscriber lines are taken and their audio signals are converted to PCM type signals. While being as PCM, several subscriber signals may be combined to be transmitted through a single wire. In the American primary DS-1 signal standard, 24 subscriber signals may be combined in a single physical wire. The European standard established by the CCITT allows 30 subscriber signals to be coded in the same physical wire.

Using the European PCM 30 standard, the subscriber phase of the figure would be taking 1024 subscribers to share four PCM lines. Since each line has 30 channels, then the 1024 subscribers would have to share 120 PCM channels. This situation has to be taken into account as part of the traffic design when installing a telephone exchange. In this hypothetical case it is being assumed that at a given moment of use during the peak utilization hour, only 120 out of the 1024 subscribers will be talking at the same time and that the average duration of his call is such that in the moment that one subscriber hangs his headset a new one is about to initiate a call.

The subscriber phase will also register the number the subscriber dialed to establish the path the call must follow to reach its destination. This path is determined by the main software of the telephone exchange and the necessary connections in the Group Selector are established.

The Group Selector takes the subscriber's call and directs it to its final destination according to the path established by the main software. If it is a local call for the service zone of the telephone exchange, then the connection is returned to the subscriber phase to have it go to the corresponding subscriber line. If the line is not busy the telephone exchange will produce the ring signal making the destination subscriber aware of the new call.

If the call is intended for a telephone number that does not belong to the service zone of the given telephone exchange, the main software determines the necessary path through a trunk so the call can reach its destination. The call then exits this telephone exchange to enter another one that serves the area where the destination telephone number is located. In this other telephone exchange the Group Selector establishes the corresponding path to ring the line of the subscriber being sought.

Each trunk card receives from four to eight PCM lines and transmits its contents to another telephone exchange. The traffic considerations are greater here since it involves the communication needs of all the subscribers of the local zone with those of another location.

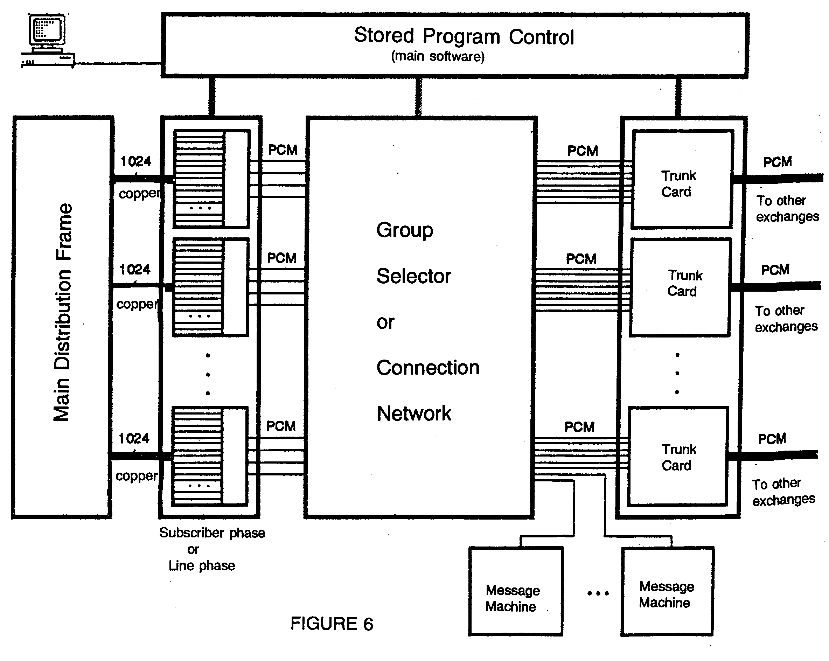

The path definition performed by the main software is a key element in having the PROTEL SERVICE included in digital telephone exchanges. One or several message machines may be connected to the PCM lines that go to the trunks as shown in figure 6.

When a telephone subscriber who is a PROTEL SERVICE user lifts his head set, this condition is sensed in the subscriber phase and made known to the main software of the telephone exchange. The main software "knows" that the subscriber is a PROTEL SERVICE user by means of the categories mechanism used in every digital telephone exchange. Since the subscriber has a PROTEL SERVICE user category, the main software of the telephone exchange will establish a path to the PCM channel(s) connected to the message machines. The message machine senses the take over, answers the call and sends its message.

Depending on the variation used, the message substitutes the invitation-to-dial tone or precedes the emission of the invitation-to-dial tone. In the first case, once the subscriber has dialed the first digit, the message will be interrupted and the call will proceed as usual. In the second case, the message remains during three seconds, concludes, the telephone exchange sends the invitation-to-dial tone and the call proceeds as usual.

The message machine connection at the trunks level of a telephone exchange and the control to provide the PROTEL SERVICE by the main software, render the installation and maintenance much simpler and cheaper.

It is not necessary to add new racks or special subscriber cards to install the PROTEL SERVICE, and the maintenance of the subscribers may be done from any control terminal of the telephone exchange.

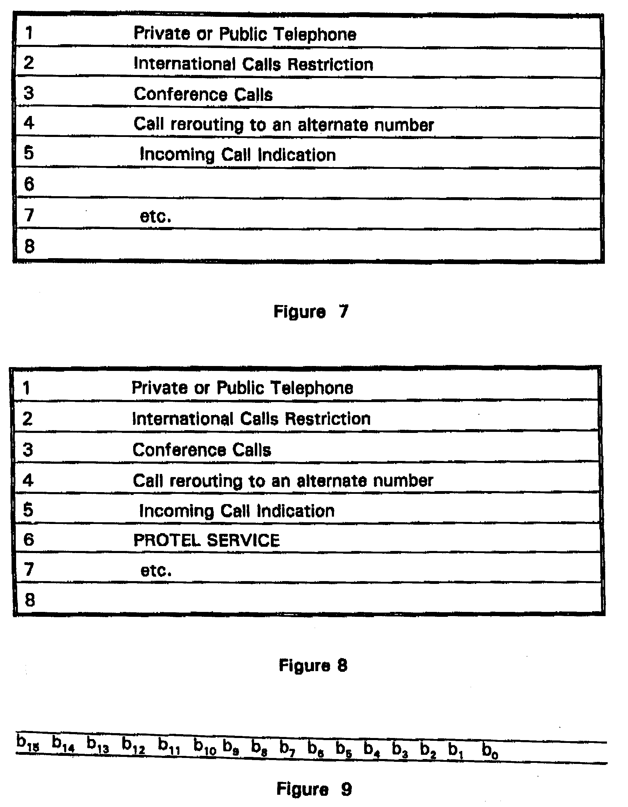

All digital telephone exchanges use a system of categories to identify the condition of each subscriber and to determine the services he has right to. The categories of a subscriber are stored in the memory of the telephone exchange, where they are accessed by the main software. The categories of a subscriber could be represented schematically as shown in the table of figure 7 below.

The example of figure 7 shows a fictitious table of categories that does not correspond to any particular digital telephone exchange, but does serve the purpose to illustrate the point. The category 1 allows the telephone exchange to differentiate whether the subscriber is a private telephone number or a public one. The category 2 would indicate whether this subscriber has any restriction to make international calls. The category 3 would allow the subscriber to establish a conference call with two or more other subscribers. The telephone exchange consults the table of categories to verify whether the service being requested by a subscriber may be completed or not.

To include the PROTEL SERVICE it would be required to define one or more categories recognizable by the main software of the telephone exchange to connect the corresponding message machine at the appropriate moment. The figure 8 shows a situation where the PROTEL SERVICE would be included.

At the same time, each category is represented by a set of bits. Each bit of the category may be used to indicate a particular situation of the category. For example, if the service is available or not. In the case of the PROTEL SERVICE, each bit could serve to identify different subscriber types within a given category.

If it is assumed that each category contains 16 bits, then we could think of the PROTEL SERVICE category having the structure of figure 9.

The description given next to each bit is a suggestion that may be revised and fine tuned in a later design phase. The purpose of the description is to provide an idea of the functionality being sought with this type of implementation. For example, each bit of the category could be used in the following manner:
- b15:: The category is active or not. Should it be active we would have a subscriber who is a user of the PROTEL SERVICE.
- b14:: The variation of the PROTEL SERVICE that would be used with the subscriber. One is to substitute the invitation-to-dial tone with the prerecorded message. The other one is to connect the prerecorded message for three seconds and then establish the invitation-to-dial tone.
- b13 and b12:: Could be used to establish whether the PROTEL SERVICE is 100%, 75% or 25% of the day active. 75% would imply that out of every four calls attended by the telephone exchange three would be serviced by the PROTEL SERVICE.
- b11 to b0:: Other combinations may be assigned in which it would be specified whether the subscriber is of the residential or commercial type. The type of activity he is engaged in: commerce, local industry, exports, tourism, education, etc. Specifying different geographical areas within the zone covered by the telephone exchange could be considered, with the restrictions we have already stated.

In order to offer the PROTEL SERVICE to the subscribers, it is possible that certain modifications to the main software that controls the telephone exchange be required. The extent to which the main software may require to be modified depends entirely on the functionality currently installed in the telephone exchanges. However, since the suggested implementation conforms to the current mode of operation of the categories, it is estimated before hand that these modifications will not represent any major programming changes in the existing main software.

Specifically, the main software must be modified to perform the following tasks:
1.- Check the subscriber's table of categories to verify whether he is entitled to the PROTEL SERVICE or not.
2.- Determine the service variation to be provided to the subscriber, should he be entitled to the same: substitution of the invitation-to-dial tone with the prerecorded message or the sequence consisting of the three second message followed by the invitation-to-dial tone.
3.- Establish a path to the message machines depending on the bit pattern of the corresponding category which define the subscriber type and other attributes, see figure 9 and its respective explanation. For example, if the subscriber is residential with an occupation in tourism, a path would be established to the PCM channels corresponding to the message machine containing the specific message for that type of subscribers.
4.- Continue with the normal call sequence once the PROTEL SERVICE has been rendered.

There is absolutely no limitation. Every subscriber of a given telephone exchange may choose to connect or disconnect himself/herself to/from the service. The connection is done through one of the telephone exchange control terminals.

The invitation-to-dial tone substitution by the prerecorded message is done.

The sequence consisting of connecting the prerecorded message for three seconds and then sending the invitation-to-dial tone is done.

It is important to notice that this implementation of the PROTEL SERVICE is based on the local telephone exchange, which by itself implies that there is a geographical location, defined by the distribution design of the telephone service company's network. This distribution covers groups of 10,000 to 40,000 subscribers in Costa Rica and up to 350,000 subscribers in some cities in the United States. The analog telephone exchanges are normally capable of handling up to 10,000 subscribers, whereas telephone exchanges of larger capacities are of the digital type.

Within a specific telephone exchange each subscriber may be connected to any existent message machine independently. However, since the service is tied to the telephone number and not to its location within the geographical zone, a group of telephone numbers are not necessarily located within the same geographical area serviced by the telephone exchange.

Finally, there is a limit to the amount of messages available. This depends on the message capacity of the message machine and on the number of message machines available.

The connection via categories of the telephone exchange between a subscriber and the message machines slows any relation between subscriber types and message types to be established. The only limitation, again, lies in the number of messages available in the message machines.

Here the limitation lies in the design of the message machine. However, the limitation is much lesser because it is quite simple to have the message machine change a given set of resident messages by another set of messages at a predetermined hour. This process may take place repeatedly according to a predefined schedule.

From the point of view of the PROTEL SERVICE the number of different required messages would be the result of:
a) Number of geographical areas within the telephone exchange zone
b) Number of subscriber types per geographical area, and
c) Number of periods in a day per subscriber type.

From the point of view of the design presented the maximum number of available messages would depend on:
a) The number of available message machines in the telephone exchange
b) The number or channel groups to which a different message could be assigned per message machine, and
c) the number of different periods that may be programmed during the day for each group of channels.

Both points of view have to be balanced to adequately meet the advertisement requirements with the required infrastructure at the telephone exchange.

The number of message machines that are required for a given telephone exchange will depend on the needs from the advertisement point of view, the restrictions or the amount of different messages that the message machine may handle and the traffic requirements to prevent the PROTEL SERVICE of becoming a bottle neck.

The cost of a message system such as the one sold by the firm CIBERTEC S.A., see appendix 1, is around $42,000 in its basic version. This system is currently being used to evacuate information requests from customers in some banks of the National Banking System, in private banks and to provide the time in the number 112.

The system from CIBERTEC S.A. would need to be modified in order to meet the requirements stated in this document.

Once the PROTEL SERVICE has been installed in a telephone exchange, maintenance of the PROTEL SERVICE would involved two main activities: maintenance of the messages and maintenance of the subscribers.

The maintenance of the messages would consist in recording the messages in digital form and introducing them in the message machines according to the marketing needs. This operation would be as simple as introducing a diskette into a computer, once the message is in a digital media.

The maintenance of the subscribers would consist in drawing new subscribers to the PROTEL SERVICE and removing the service from those who no longer desire to have it and performing changes in the subscriber type to allow the reception of a new set of different messages. These actions would be performed through one of the digital telephone exchange control terminals. The corresponding bit patterns of the respective subscriber categories belonging to the PROTEL SERVICE would be changed there.

Each message machine will allow the availability of a set of messages for one or more subscriber types. Should it be necessary to identify four or eight different types of subscribers, then four or eight separate message sets will be required. These messages could reside in one same message machine or in several. The decision lies on the traffic needing to be serviced. Having considered this, every group of subscribers is warranted a prompt service by the PROTEL SERVICE with no risk of the same becoming a bottle neck to place a call.

The message machine is a device capable of storing digitally prerecorded messages and offering them through PCM channels according to the DS-1 American Standard of 24 channels or the 30 channels European one of the CCITT.

For the specific case of the implementation by interception of the PROTEL SERVICE, it is not necessary to use any of these two standards specifically, since its operation is independent of the telephone exchange type. Only the compatibility with the special subscriber cards has to be guaranteed.

In the implementation by programming of categories it is of utmost importance that the PCM standard of the message machine coincide with that of the telephone exchange.

The CBT 16000 or the TAPCM-120 systems manufactured by the firm CIBERTEC S.A. are similar to what would be required for any of both implementations, see appendix 1. However, their current construction is actually based on the European CCITT standard.
the message machine should have the following features to provide the functionality required by PROTEL SERVICE:
1.- It should conform to the DS-1 signal American Standard or to the European PCM 30 + 2 Standard of the CCITT.
2.- The messages contained in the message machine should be easily changeable with new messages, in order to satisfy the needs of the advertising companies. The messages could be recorded in any private studio using microcomputer-based multimedia technology. The digitalized information could be transferred to the message machines by means of diskettes.
3.- The message machine must be capable of changing the message according to the hour of the day. For example, the day could be divided into four mutually exclusive periods, whose starting and finishing time could be programmed afterwards. This way each message machine would have four different messages assigned to it according to the period of the day. Thus, when a subscriber lifts his head set at certain given time of the day, the message he would listen to would be the one corresponding to the period of the day for that particular hour.
4.- The message machine should be able to assign messages to different groups of PCM channels. For example, in the case of the PCM 30 + 2 the 30 PCM channels could be divided into three different messages each one of them utilizing five channels, or any other convenient distribution according to the estimated traffic level. With any division of channels and messages chosen there would be always the capacity to change the advertisement depending on the time of the day. Continuing with the examples of the prior and present paragraph, there would be a total of twelve messages. Three groups of five channels each and each group of channels with messages for four different periods during the day.
5.- The massage machine must be capable of storing messages with a 3 to 5 seconds duration.
6.- The message machine must provide the means to have the subscriber begin listening to the message with the least possible delay. It is estimated that this delay may not exceed one second.

While the invention has been described with reference to specific embodiments, modifications and variations of the invention may be constructed without departing form the scope of the invention, which is defined in the following claims.

## Claims

1. A telephone advertising service method, comprising providing a short advertising messages to telephone receivers telephone calls are initiated.

2. The method of claim 1, further comprising terminating the advertising messages after a predetermined run time, and adding invitation-to-dial tones.

3. The method of claim 1, further comprising terminating the advertising messages when subscribers start to dial numbers.

4. The method of claim 1, comprising providing the advertising messages in lieu of invitation-to-dial tones.

5. The method of claim 1, further comprising differentiating subscribers individually and providing the differentiated subscribers with distinct advertising messages.

6. The method of claim 5, wherein the differentiating comprises distinguishing among subscribers by characteristics of exchange number, monthly call volume, call type, geographical location and time of day.

7. The method of claim 1, wherein the advertising messages are provided by a message system rack connected to a digital or analog telephone exchange.

8. The method of claim 7, wherein the rack comprises plural message recorders and plural cards connected to multiple users.

9. The method of claim 1, wherein the providing of advertising messages comprises connecting plural message recorders to a software control connection network.

10. The method of claim 1, further comprising sensing subscriber lines to sense when a call is being initiated, signalling to a controller that a telephone call is being initiated, activating a PCM audio interface, searching for an available message channel, and switching the message channel to the subscriber line and playing a corresponding message over the subscriber line, connecting the subscriber line to the telephone exchange and providing an invitation-to-dial tone to the subscriber line.

11. The method of claim 10, further comprising offering several different messages in different sets of channels and changing the messages depending on the time of day.

12. The method of claim 10, further comprising providing an inhibit service signal, sensing whether the prohibit service signal is active, and switching subscriber line directly to the telephone exchange when the prohibit service switch is active.

13. The method of claim 1, further comprising awaiting a line sense signal and activating the message system upon sensing a subscriber line signal, reading status of an inhibit service signal, connecting the subscriber line to an exchange upon sensing the inhibit service signal activating a pulse code modulated audio interface upon the line sense signal, and delivering the prerecorded message waiting for the prerecorded message to finish and connecting the subscriber line to the telephone exchange.

14. Telephone direct advertising apparatus, comprising a telephone exchange having connections to telephone trunks and having connections to a main distribution frame, and having cross-connections in the main distribution frame between site and subscriber numbers, a plurality of cables connected to the main distribution frame and a plurality of distributors individually connected to the cables, multiple subscriber lines connected to each distributor and multiple subscriber sets connected individually to the subscriber lines, and message recorders connected to the telephone exchange for connecting through the subscriber lines to the subscriber sets

15. The apparatus of claim 14, further comprising plural message cards mounted in a message system rack and connected between the telephone exchange and the distribution frame, and wherein the message recorders are connected to the cards.

16. The apparatus of claim 15, wherein the cards comprise connections to multiple subscriber lines, a line sensor connected to the subscriber line connections for sensing change from at rest to in service condition of a subscriber line, a control connected to the line center, a PCM-audio interface connected to the control and connected to a message recorder, an exchange line connected to the card and to the exchange, a switch connected to the control for connecting a subscriber line to the interface and alternatively connecting the subscriber line to the telephone exchange.

17. Telephone advertising message service apparatus, comprising a trunk connector having plural trunk cards connected to PCM trunks to other exchanges, plural PCM lines connected to each trunk card, a connection network connected to the plural PCM lines, plural digital lines connected to the connection network, a subscriber phase or line phase having plural subscriber phase or line phase cards connected to the plural digital lines, analog cables connected to the subscriber phase or line phase cards, a main distribution frame connected to the analog cables, and subscriber lines and subscriber sets connected to the main distribution frame, a stored program controller connected to the trunks, to the connection network and to the subscriber phase or line phase, and advertising message recorders connected to the apparatus for supplying advertising messages to the subscriber lines.

18. The apparatus of claim 17, wherein the message recorders are connected to the connection network for connecting the message recorders to the subscriber lines.
